# EUROPEAN PATENT APPLICATION

(11) **EP 4 628 390 A1**
(43) Date of publication of application: **08.10.2025**
(21) Application number: 24168743.3
(22) Date of filing: 05.04.2024
(51) Int. Cl.: B62D 1/10, B62D 1/04, B62D 1/181, B62D 1/183

(54) **SWIVEL SYSTEM FOR A STEERING WHEEL OF A VEHICLE**

(71) Applicant: Volvo Car Corporation, 405 31 Göteborg (SE)
(72) Inventor: ANTONSSON, Bo, 40531 Göteborg (SE); AICKEN, Richard, 40531 Göteborg (SE)
(74) Representative: Maiwald GmbH

(57) **Abstract**

The disclosure relates to a swivel system (100) for a steering wheel (200) of a vehicle (400), the swivel system (100) comprising an attachment portion (110) for attaching the swivel system (100) underneath an instrument panel (310) of the vehicle (400), and the swivel system (100) comprising a linking portion (120) for linking the steering wheel (200) to the attachment portion (110), the linking portion (120) being configured such that the steering wheel (200) can be moved between a stowed position (SP), in which the steering wheel (200) is stowed underneath the instrument panel (310), and an operational position (OP).

## Description

### TECHNICAL FIELD

The present disclosure relates to a swivel system for a steering wheel of a vehicle, a steering wheel arrangement for a vehicle, and a vehicle.

### BACKGROUND ART

In autonomous vehicles, steering wheels may be less often required since the vehicle can autonomously steer the vehicle without requiring the driver to use the steering wheel for steering the vehicle. However, it may still be desirable to allow the driver to use the steering wheel when they wish to steer the vehicle by themselves or when a situation should require them to do so.

For a large portion of time, however, the steering wheel may unnecessarily limit the space between the driver and the instrument panel. Depending on the level of autonomous driving, the driver may not be required to steer the vehicle by themselves at all and thus, during the driving of the autonomous vehicle, the space in the front of the driver could be better used than by being occupied by the steering wheel, e.g., by giving the driver more space to move, e.g., when entering the vehicle, or for performing tasks benefitting from the increased space.

Adjustments of the steering wheel position with respect to the driver position are known to increase the driver's comfort. However, this does not clear up all the space occupied by the steering wheel in the front of the vehicle. Moreover, this adjustment is often rather cumbersome and not particularly intuitive, not giving the best customer experience.

### SUMMARY

The problem is at least partially solved or alleviated by the subject matter of the independent claims of the present disclosure, wherein further examples are incorporated in the dependent claims.

According to a first aspect, there is provided a swivel system for a steering wheel of a vehicle, the swivel system comprising an attachment portion for attaching the swivel system underneath an instrument panel of the vehicle, and the swivel system comprising a linking portion for linking the steering wheel to the attachment portion, the linking portion being configured such that the steering wheel can be moved, in particular swiveled, between a stowed position, in which the steering wheel is stowed underneath the instrument panel, and an operational position.

Thereby, the swivel system of this disclosure provides for the possibility of stowing the steering wheel, in particular substantially completely, underneath the instrument panel, thereby freeing up substantially the entire space occupied in front of the driver or driver seat (when looking towards the instrument panel) in the operational position. Further, the swivel system provides for a simple and very intuitive movement, in particular swiveling, of the steering wheel between the operational position and the stowed position, which gives a great customer experience when handling the vehicle and can be further enhanced by the further features described herein and relating, inter alia, to the handling and safety, of the swivel system and the herein described steering wheel arrangement comprising the swivel system with the steering wheel. Swiveling may be in particular understood as being based on an at least partial, substantially fully or fully rotational or swivel movement of the steering wheel by means of the swivel system.

In the operational position of the steering wheel, the steering wheel may not be stowed at least partially underneath the instrument panel anymore such that the driver of the vehicle may operate the steering wheel for steering the vehicle. In particular, in the operational position of the steering wheel, the steering wheel may be arranged between the driver or driver seat of the vehicle and the instrument panel. In other words, in the operational position of the steering wheel, the steering wheel may be located adjacent or next to the instrument panel such that it may be operable by the driver for steering the vehicle. For example, the steering wheel may be behind the instrument panel when looking from the driver seat towards the instrument panel or in front of the instrument panel when looking from the instrument panel to the driver or driver seat.

The proposed swivel system is particularly beneficial in an autonomous or at least partially autonomous vehicle, meaning that the vehicle may at least for some duration and/or for some driving tasks autonomously control driving of, in particular at least steering of, the vehicle. However, the swivel system and the steering wheel arrangement of this disclosure are not limited to autonomous or at least partially autonomous vehicles but can be used in any vehicle, i.e., with or without autonomous driving capabilities.

Specifically, the vehicle may be of any type regarding autonomous driving capabilities, i.e., comprising none, some or full autonomous driving capabilities. The vehicle may be an automobile, such as a passenger car or truck, for example, but is not limited thereto. For example, other vehicles such as ships, may also be provided with the swivel system described herein.

While the swivel system is capable, in particular configured, for comprising a steering wheel attached to its linking portion, any other structure, in particular vehicle structure, can be alternatively attached to the linking portion and thereby swiveled by means of the swivel system. For example, but not limited thereto, the structure could be an additional or another structure for steering and/or controlling the vehicle, or an additional or another structure for other purposes, e.g., in the form of a display, e.g., as infotainment display or as part of the instrument panel, a joystick, and similar. Also, the swivel system may be provided not only in front of the driver seat but also in front of the front passenger seat or seats (when looking from the instrument panel towards the seats or, in other words, between the instrument panel and the seats). Hence, whenever a reference to the driver is mentioned herein, a passenger, in particular front passenger, is envisioned as well.

The attachment portion of the swivel system may have one or more of attachment sections, which may be configured for attachment or, in other words, mounting to the instrument panel or another vehicle structure, in particular such that the swivel system is attached underneath the instrument panel. The attachment portion may be a single part or a plurality of two, three or more parts, in particular attachment sections, which may be connected with another directly or indirectly, e.g., through the linking portion, or not. For example, screws, bolts and/or any other attachment means may be used for attaching the attachment portion. Similarly, the linking portion may be attached by any joints, screws, bolts and/or any other attachment or swiveling means to the attachment portion and/or to the steering wheel. In particular, one or more hinges of the linking portion may thereby be attached to the attachment portion and/or the steering wheel.

The stowed position may be configured such that the steering wheel is substantially fully stowed underneath the instrument panel, which may mean that the steering wheel is stowed with 90% or more or fully underneath the instrument panel when looking from atop or bottom of the instrument panel. In the stowed position, a steering of the steering wheel may be restricted or at least less convenient to the driver in terms of location of the steering wheel when the driver is properly seated in their seat and/or by locking any steering operation mechanically and/or electronically. The operational position may be configured such that the steering wheel may be (ergonomically) operated by the driver seated in the steering wheel. When the vehicle, in which the swivel system is being used, is an autonomous or at least partially autonomous vehicle, when bringing the swivel system into the operational position, the driver may want to make use of the steering wheel during driving of the vehicle, and when bringing it into the stowed position, the driver may want to use the autonomous capabilities of the vehicle rather than steering themselves.

In particular, the linking portion may be configured such that the steering wheel can be substantially fully or fully swiveled between the stowed position and the operational position, in particular in a single and/or continuous swivel motion. This may mean that no other motion than the swivel motion may be needed to switch between the operational position and the stowed position. Instead, the switching between the positions may be substantially fully or fully based on the swivel motion of the linking portion. In particular, no additional other, in particular no linear or other rotational, motions may be required, as typically provided for to adjust the steering wheel position, which require much installation space and have complex and additional mechanics.

In an example, the linking portion may comprise two hinges for linking the attachment portion to the steering wheel. Comprising two hinges instead of one hinge allows for flexibility in the design of the swivel motion of the swivel system, thereby enabling a small swivel radius or movement and less or no interference with the driver, in particular his legs, during the swiveling. However, alternatively, the linking portion may only be provided with one hinge. Also, it may be possible to provide more than two hinges.

In an example, each of the two hinges may have a first swivel axis arranged at or proximate the attachment portion and a second swivel axis for connection to the steering wheel. Thereby, the two hinges may enable substantially full or full swiveling of the steering wheel with respect to the instrument panel between the positions in a simple manner. The first swivel axes of each one of the hinges may be located apart from one another or may be coinciding. The second swivel axes of each one of the hinges may be located apart from one another or may be coinciding.

In an example, the two hinges may have different lengths. Thereby, and/or optionally by means of positioning the respective swivel axes of the two hinges, the individual swivel motions, in particular the arc-shaped movements, of the hinges may be configured differently. The common swivel motion based on the individual swivel motions may thereby be designed in an advantageous manner, e.g., such that the common swivel motion moves the steering wheel as close as possible to the instrument panel and as far away from the driver, in particular his knees or legs, as possible, to prevent collision therewith. The arc-shaped movement may refer to any movement of one or both hinges in an arc, wherein the arc may be but is not limited to a substantially circular arc, i.e., a circular arc-shaped movement. The arc or arc-shaped movement may have any dimensions, e.g., in terms of length and width, and/or degree, e.g., in terms of bend of the arc.

In an example, a first hinge of the two hinges may be configured to swivel the steering wheel from the operational position into the stowed position in a first arc-shaped movement, and a second hinge of the two hinges being configured to swivel the steering wheel from the operational position into the stowed position in a second arc-shaped movement during the first arc-shaped movement of the first hinge. The second arc-shaped movement may have a smaller arc radius than the first arc-shaped movement. Thereby, in particular by means of the respectively smaller second arc-shaped movement, it may be provided that the steering wheel is pulled closer to the instrument panel during the swiveling, requiring less space and not interfering with the driver, in particular their knees or legs, while, in particular by means of the first arc-shaped movement, the steering wheel may be swiveled far enough to provide the operational position and the stowed position, in particular in a way such that the steering wheel can be comfortably operated in the operational position and/or the steering wheel can be substantially fully or fully stowed underneath the instrument panel. The different arc-shaped movements or, in other words, arc radii of the hinges may be, for example, configured based on the different lengths thereof. In particular, the first hinge may have a greater length than the second hinge. Additionally, or alternatively, the different arc-shaped movements or, in other words, arc radii of the hinges may be, for example, configured based on the location of arrangement and/or number of the swivel axes of the hinges. Other configurations may additionally or alternatively be used to provide the different arc radii of the hinges.

In an example, one of the two hinges may be at least partially configured as a housing for a gear for coupling a rotary axis to a steer by wire motor. In particular, the rotary axis may be configured for attachment to or attached to the steering wheel. The partial configuration of the one of the two hinges as a housing may refer to only a portion of the hinge being configured as a housing and/or the gear only being partially housed by the housing. The rotary axis may be part of the swivel system, the steering wheel and/or the steering wheel arrangement described herein. Since the rotary axis is coupled to the steering wheel, a turning of the steering wheel will translate into a rotation of the rotary axis, which, via the gear, may be registered by the steer by wire motor. The gear may have two or more gear wheels, for example, one of which may be coupled to the rotary axis and the other one may be coupled to an axis of the steer by wire motor. The steer by wire motor, in particular a sensor and/or control unit thereof, may accordingly generate, based on the rotation of the rotary axis and the gear wheels, an electronic or, in other words, electric signal indicative of the direction and degree of turning of the steering wheel by the driver or, in other words, a steering request by the driver. The signal may then be used for a steer by wire application of the vehicle, i.e., use the signal to steer rather than a mechanical connection between the steering wheel and the steered wheels of the vehicle. Hence, one of the hinges, in particular the first hinge, may also serve as a housing of the gear and thereby protect it from the surrounding and protect the driver or any passenger from accidentally being injured by reaching into the gear. Further, advantageously, a steer by wire application may be provided with the swivel system of this disclosure. Alternatively, a conventional mechanic connection between the steering wheel and the steered wheels of the vehicle may be used.

In an example, the swivel system may comprise a mechanical locking system for mechanically locking the steering wheel in the stowed position and/or in the operational position. Further, the swivel system may comprise a mechanical locking portion and a mechanical locking element, which may be configured correspondingly to one another or, in other words, to interlock with one another. For example, the mechanical locking portion may be provided on one of the two hinges, in particular on the first hinge, in particular at an outer and/or radial portion thereof. For example, the mechanical locking portion may be configured as a recess, in particular configured, e.g., sized, to interlock with the mechanical locking element. For example, the mechanical locking element may be configured as a pin or similar, in particular configured, e.g., sized to interlock with the mechanical locking portion. For example, the mechanical locking element may be provided as part of the attachment portion or at least attached thereto, in particular such that it may be positionally fixed with respect to the instrument panel. For example, there may also be provided two mechanical locking portions for mechanically locking the steering wheel, one for the stowed position and one for the operational position. Advantageously, both may be provided at a distance from another on at least one of the hinges, in particular both on the first hinge, and further in particular at the outer and/or radial portion thereof. Thereby, when the first hinge is being swiveled, in particular around its first swivel axis, moving the steering wheel between the two positions, one of the two mechanical locking portions is always brought into interlocking, in particular with the same or a single mechanical locking element.

For example, the mechanical locking system may comprise a spring-loaded mechanical locking element for interlocking with a mechanical locking portion. By comprising a spring loading the mechanical locking element, in particular when the mechanical locking element is attached to the attachment portion or positionally fixed relative thereto and/or the attachment portion, a compact arrangement can be provided, in which the spring, based on its spring characteristics, dictates or at least influences the force required to swivel the steering wheel between the positions. Alternatively, the spring or an additional spring may be provided elsewhere to set the force required to swivel the steering wheel. Also, by choosing a spring with appropriate spring characteristics, e.g., by choosing the material, dimensions and type of the spring, the force required to swivel the steering wheel may be adjusted.

According to a second aspect of this disclosure, there is provided a steering wheel arrangement for a vehicle, the steering wheel arrangement comprising the swivel system of any one of the previous claims and a steering wheel, the linking portion linking the steering wheel to the attachment portion.

In an example, the steering wheel arrangement may further comprise a rotary axis coupled to the steering wheel for receiving a steering input based on a turning of the steering wheel. The steering wheel arrangement may further comprise a gear and/or a steer by wire motor, the rotary axis may be coupled to the steer by wire motor via the gear. As previously mentioned, the steer by wire motor, and optionally the gear, may alternatively be replaced by a conventional mechanical link between the steering wheel and the wheels of the vehicle.

In an example, the steering wheel arrangement may further comprise a second gear, the rotary axis being coupled to the steering wheel via the second gear, the second gear comprising a housing, to which the linking portion is attached. The second gear, which may comprise two or more gear wheels, for example, may provide the gearing or gear ratio between the rotation of the steering wheel and the rotary axis. This may be particularly advantageous when attaching the rotary axis to the steering wheel away or off set from a center of the steering wheel, e.g., at a bottom portion of the steering wheel. Also, the housing of the second gear may serve two purposes, namely the protection of the gear wheels inside the housing and as attachment for the linking portion, in particular for both hinges. Alternatively, however, the linking portion, in particular both of the two hinges, may be attached directly to the steering wheel, e.g., a connection portion thereof, e.g., when no second gear is provided, or no housing of the second gear is provided.

In an example, the steering wheel arrangement may comprise an electronic safety device for disabling the steering wheel from being swiveled from the operational position into the stowed position, the electronic safety device being configured to receive an electronic signal for enabling the steering wheel to be swiveled from the operational position into the stowed position. This prevents an accidental swiveling of the steering wheel towards the stowed position during operation of the steering wheel or when it is in the operational position. For example, the driver or passenger may be required to generate the electronic signal based on input indicative of their intention to stow the steering wheel. The input may be provided, for example, on any vehicle input means such as but not limited to a touch display, mechanical control unit, such as a control wheel, etc. Alternatively, or additionally, the steering wheel, in particular a connection portion thereof, may be provided with one, two or more physical or touch buttons, which may need to be pressed and/or touched, either separately or simultaneously or together, for providing the electronic signal or, in other words, the electronic signal being received by the electronic safety device. Further, the electronic safety device may be configured such that the swiveling from the stowed position into the operational position is always enabled. In other words, the electronic safety device may be configured for locking only the operational position.

For example, the electronic safety device may comprise an electromagnetic actuator being switchable based on the electronic signal. The switching may relate to either enabling or disabling the swiveling, and/or supplying the electromagnetic actuator with electrical energy or not. For example, the electromagnetic actuator may be a solenoid. The electromagnetic actuator may be switchable based on the electronic signal in that it is either supplied with electrical energy or not, for example. The electromagnetic actuator may be coupled with the linking portion, in particular one or both of the two hinges. Based thereon, it may convert the electrical energy into mechanical energy for locking the linking portion, in particular one or both of the two hinges, in place or not locking them or in other words releasing them, when receiving the electronic signal.

In an example, the steering wheel arrangement may further comprise an instrument panel, the attachment portion attaching the swivel system underneath the instrument panel. The attachment portion may be directly or indirectly attached to the instrument panel or a part of the instrument panel or to another vehicle structure as long as it is attached underneath the instrument panel.

According to a third aspect of this disclosure, there is provided a vehicle comprising the steering wheel arrangement of the second aspect of this disclosure.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view on a steering wheel arrangement;
- Figure 2: shows a bottom view on the steering wheel arrangement;
- Figure 3: shows an open view on a part of the swivel system of the steering wheel arrangement;
- Figure 4: shows a schematic illustration of the steering wheel arrangement in an operational position inside a vehicle;
- Figure 5: shows a schematic illustration of the steering wheel arrangement in a stowed position inside the vehicle; and
- Figure 6: shows a sequence of the swiveling of the swivel system of the steering wheel arrangement in different momentary states between the operational position and the stowed position.

### DETAILED DESCRIPTION

The Figures are merely schematic representations and serve only to illustrate examples of the disclosure. Identical or equivalent elements are in principle provided with the same reference signs.

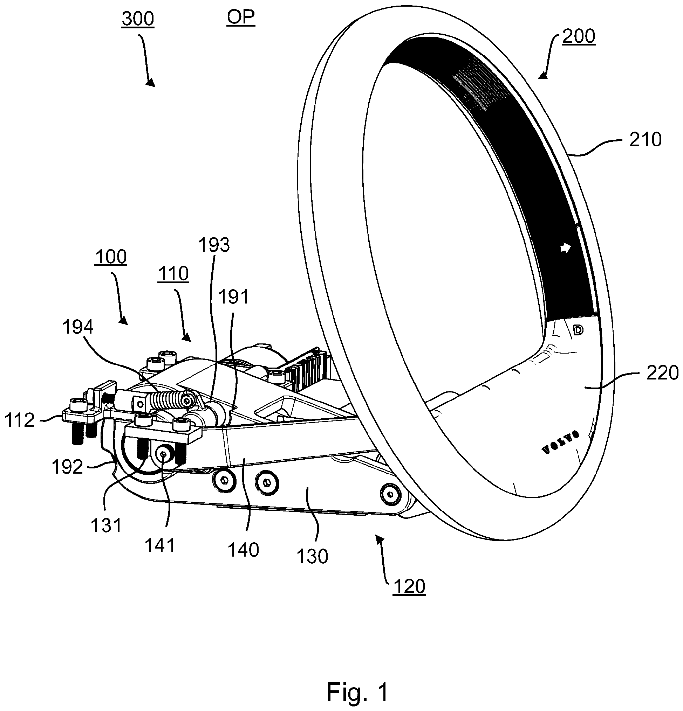

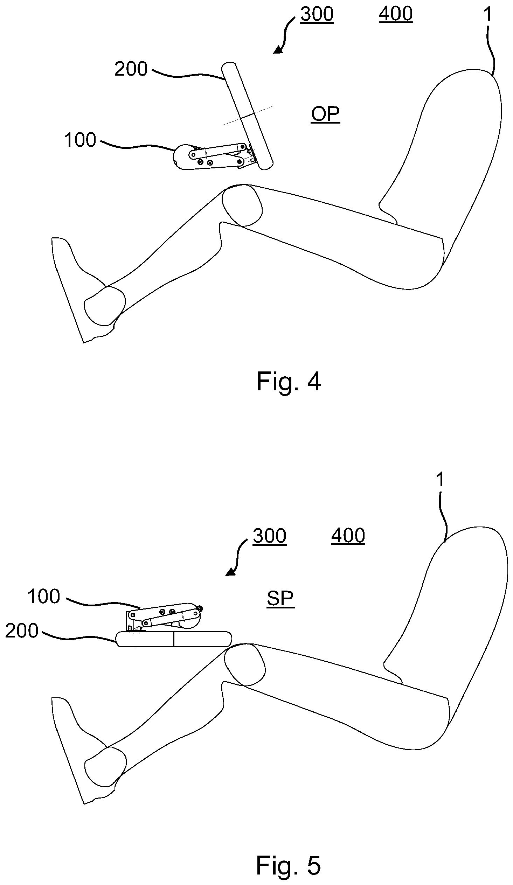

Figure 1 shows a perspective view of a steering wheel arrangement 300 for a vehicle 400 (see Figs. 4, 5), the steering wheel arrangement 300 comprising a swivel system 100 and a steering wheel 200.

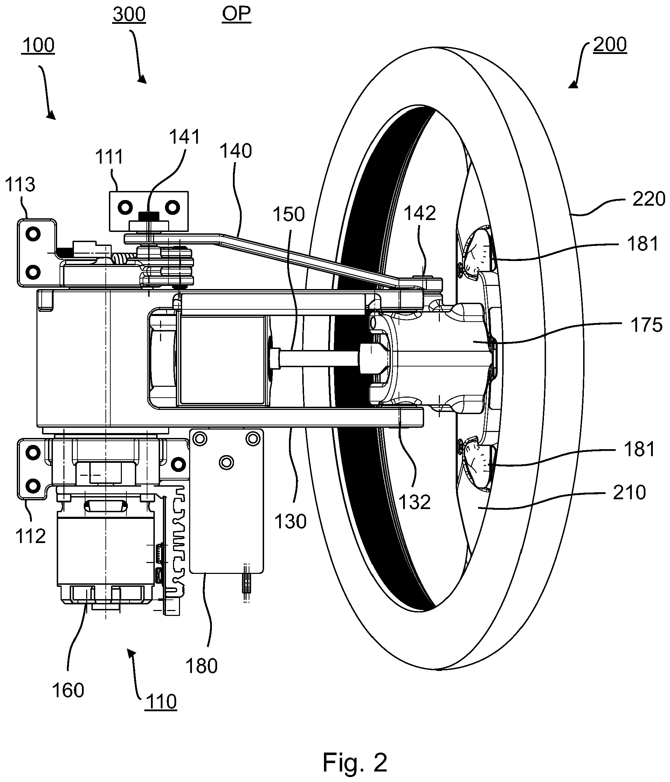

Figure 2 shows the steering wheel arrangement 300 in a bottom view.

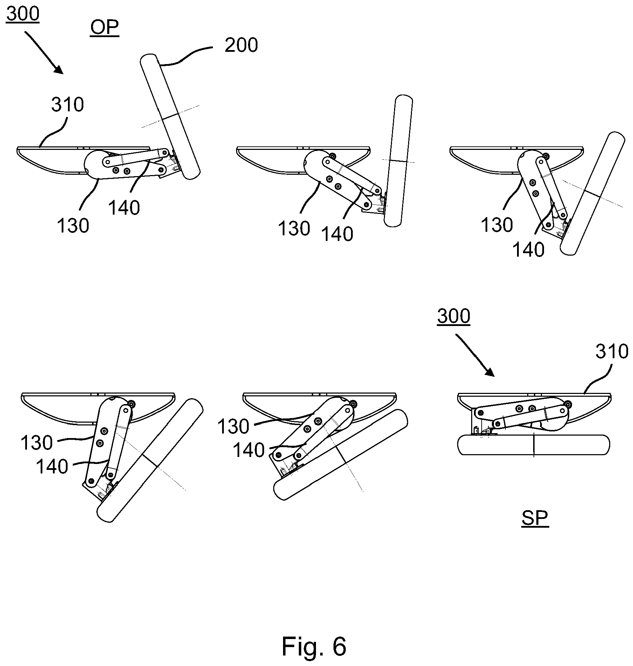

The swivel system 100 comprises an attachment portion 110 and a linking portion 120. The attachment portion 110 is configured for attaching the swivel system 100 underneath an instrument panel 310 (see Fig. 6 showing at least a portion or part of the instrument panel 310, to which the attachment portion 110 may be attached, wherein the instrument panel 310 may of course be larger and comprise further parts than shown in Fig. 6, such as but not limited to, for example, a dashboard for a driver 1 or passenger) of the vehicle 400. Specifically, the attachment portion 110 may be configured for attaching it to at least a portion of the instrument panel 310.

As exemplary shown in Figs. 1 and 2, the attachment portion 110 may comprise several attachment sections 111, 112, 113, which may be located at a distance from one another and which may be configured to be attached to the instrument panel 310, e.g., as seen by means of bolts or screws. As seen in Fig. 1 and 2, specifically, the attachment portion 110 does not need to be a single and interconnected component but may have different attachment sections 111, 112, 113 distributed at different locations of the swivel system 100 and attached to the linking portion 120.

The attachment portion 110 is attached to the linking portion 120. The linking portion 120 in this example comprises two hinges 130, 140. However, one hinge or more than two hinges could be alternatively provided. The linking portion 120 is attached with its hinges 130, 140 by means of a first swivel axis 131, 141 of each one of the hinges 130, 140 to the attachment portion 110. Specifically, respective ends, in particular longitudinal ends, of the hinges 130, 140 arranged at or proximate the attachment portion 110 are provided with the first swivel axes 131, 141. For the purpose of reference only, the hinge 130 is herein referred to as a first hinge 130, whereas the hinge 140 is herein referred to as a second hinge 140.

Besides the first swivel axes 131, 141, the swivel system 100 further comprises second swivel axes 132, 142 for each one of the hinges 130, 140, which may be located or provided at ends, in particular longitudinal ends, arranged at or proximate the steering wheel 200 or opposite of the first swivel axes 131, 141. The steering wheel 200 may be attached to the hinges 130, 140 by means of the second swivel axes 132, 142.

The steering wheel 200 is shown herein exemplary with a connection portion 210, to which a rotary axis 150 may be attached, as shown in Fig. 2, and a wheel portion 220, the connection portion 210 and the wheel portion 220 being fixedly attached to one another or formed together.

In this example, the connection portion 210 is off set from a center of the wheel portion 220. In particular, the connection portion 210 is provided at a lower or rim portion of the wheel portion 220, without filling out the center of the wheel portion 220 as conventional steering wheels 200 often do. However, another design is possible, in which the connection portion 210 is located elsewhere inside the wheel portion 200, e.g., in a center thereof, and connected to the wheel portion 220.

Further, the wheel portion 220 is exemplary shown with a round, in particular, substantially circular geometry, but could have any other geometry instead, e.g., square or angular or partially square or angular.

As may be seen from Figs. 1 and 2, the hinges 130, 140 are provided with different lengths, the second hinge 140 being shorter in length than the first hinge 130. Also, the first swivel axis 131 of the first hinge 130 may be located further away from the steering wheel 200 or a connection point thereto compared to the first swivel axis 141 of the second hinge 140, which may also be located (slightly) higher than the first swivel axis 131 of the first hinge 130 in the perspective of Fig. 1 or, in other words, in an extension of height of the swivel system 100 perpendicular to the extension of the swivel system 100 in length as seen in Fig. 1. Moreover, the second swivel axis 132 of the first hinge 130 may be located atop or (slightly) higher than the second swivel axis 142 of the second hinge 140, as indicated from Fig. 1 and may be seen from the bottom perspective on the steering wheel arrangement 300 of Fig. 2.

As seen in Figures 4, 5 and 6, based on the design of the swivel system 100, the steering wheel 200 may be stowed away from an operational position OP (see Figs. 4, 6) into a stowed position SP (see Figs. 5, 6), in particular under the instrument panel 310 as shown in Fig. 6, with the driver 1 or passenger sitting in front of the steering wheel arrangement 300 inside the cabin of the vehicle 400, herein indicated by reference as the inside of it.

The swiveling movement of the swivel system 100 with the thereto attached steering wheel 200 may be fluid with no fixed position but the operational position OP and the stowed position SP. Momentary states, which are no fixed position, are shown in Fig. 6 during the swiveling from the operational position OP into the stowed position SP. As will be explained further below, the operational position OP and the stowed position SP may be mechanically and/or electronically locked.

No complex movement is required for the driver 1 or passenger to switch between the operational position OP and the stowed position SP. The switching may be done based on manual operation by the driver 1 or passenger only, meaning that the driver 1 or passenger may simply push, e.g., by hand movement, the steering wheel 200 away when it is in the operational position OP to stow it underneath the instrument panel 310 and pull it towards themselves when it is in the stowed position SP.

The switching of the two positions OP, SP may be purely based on a swiveling movement as seen in Fig. 6 as opposed to a mix of different types of movements or additional movements, e.g., linear, of the steering wheel 200. Thus, no additional installation space behind or underneath the instrument panel 310 may be required with the present swivel system 100 as opposed to a stowing system requiring a mix of different kinds of movements, different mechanical systems, and possibly requiring large installation space behind the instrument panel 310.

Specifically, by means of one or more of the herein described design features of the two hinges 130, 140, e.g., their relative lengths to one another, i.e., one being shorter than the other, the position and/or number of their swivel axes 131, 132, 141, 142, etc. or similar, the first hinge 130 may be configured to swivel the steering wheel 200 from the operational position OP into the stowed position SP in a first arc-shaped movement, as may be generally seen by looking at the sequence of the swivel motion shown in Fig. 6, while the second hinge 140 may be configured to swivel the steering wheel 200 from the operational position OP into the stowed position SP in a second arc-shaped movement during the first arc-shaped movement of the first hinge 130, wherein the second arc-shaped movement has a smaller arc radius than the first arc-shaped movement.

Thereby, in particular by means of the second arc-shaped movement, it may be provided that the steering wheel 200 is pulled closer to the instrument panel 310 during the swiveling, requiring less space and not interfering with the driver 1 or passenger, in particular their knees or legs, as may be seen in Fig. 5, while, in particular by means of the first arc-shaped movement, the steering wheel 200 may be swiveled far enough to provide the operational position OP and the stowed position SP, as may be seen in the stowed position SP shown in Fig. 6, in particular in a way such that the steering wheel 200 can be comfortably operated in the operational position OP and the steering wheel 200 can be substantially fully or fully stowed underneath the instrument panel 310.

Specifically, as may be seen in the swivel motion from Fig. 6, the second hinge 140 may take over the swivel motion after the first hinge 130 starts guiding the swivel movement along its arc-shaped movement, from the operational position OP and/or stowed position SP. The second hinge 140 thereby may pull the steering wheel 200 closer to the instrument panel 310 than it would be possible with the longer first hinge 130 given the smaller arc-shaped movement. However, due to the longer first hinge 130, the steering wheel 200 may be swiveled along a great distance between the operational position OP and the stowed position SP such that an ergonomical operational position OP and a substantially fully stowed position SP are provided.

The different arc-shaped movements or, in other words, arc radii of the hinges 130, 140 may be, for example, configured based on the different lengths thereof. Additionally, or alternatively, the different arc-shaped movements or, in other words, arc radii of the hinges 130, 140 may be, for example, configured based on the location of arrangement and/or number of the swivel axes 131, 132, 141, 142 of the hinges 130, 140. Other configurations may additionally or alternatively be used to provide the different arc radii of the hinges 130, 140.

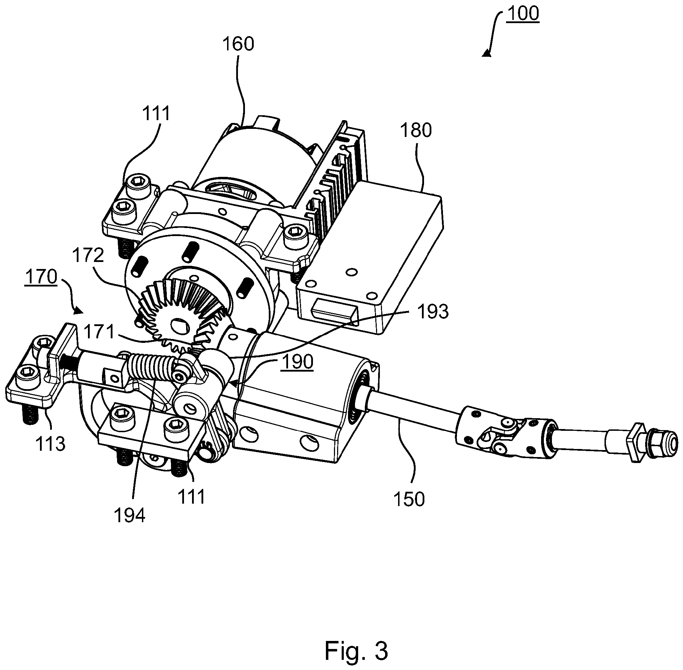

Further, as may be seen from Fig. 2, the linking portion 120 is exemplary herein attached to the connection portion 210 of the steering wheel 200. Specifically, a second gear 175, wherein the reference to the gear 175 herein is merely made to differentiate it from the later explained gear 170 or first gear 170 (see Fig. 3), is arranged between the connection portion 210 of the steering wheel 200 and a rotary axis 150. The rotary axis 150 is, via the second gear 175, linked to the steering wheel 200 such that when a driver of the vehicle 400 rotates or turns the steering wheel 200, the rotation or turning of the steering wheel 200 is translated into a rotation of the rotary axis 150 with a gear ratio based on the second gear 175.

The second gear 175 may be any type of gear such as but not limited to a planetary gear, for example. The rotary axis 150 is, on its (longitudinal) end opposite of the second gear 175, attached to other gear or first gear 170, which will be now explained further with respect to Figs. 2 and 3.

Figure 3 shows a perspective and open view on a part of the swivel system 100. Specifically, the first hinge 130 and the second hinge 140 have been removed for illustrative purposes in this Fig. compared to Fig. 2. Also, the steering wheel 200 and the second gear 175 have been removed for illustrative purposes. It becomes clear that the first hinge 130 may be at least partially, in particular in the region of the first gear 170, designed as a housing of the first gear 170. The open view thus relates to the housing of the first gear 170 not being shown.

The first hinge 130 may be provided with one or more hinge arms, in particular in the remaining region (remaining compared to the region forming the housing for the first gear 170) as may be seen in Fig. 2, for example. The second hinge 140 on the other hand may have a single hinge arm as seen in Fig. 2, which may be sufficient to keep the weight of the swivel system 100 low. However, alternatively, both hinges 130, 140 may have less or more hinge arms as exemplary described herein.

In this example, the first gear 170 comprises two gear wheels 171, 172, which are interlinked with one another. Specifically, the gear wheels 171, 172 or the first gear 170 in this example is configured as a spiral bevel gear. However, any other alternative gear type or arrangement may be provided.

The first gear wheel 171 is attached to the rotary axis 150, whereas the second wheel 172 in this example is attached to a steer by wire motor 160 for a steer by wire application. The steer by wire motor 160, in particular a sensor and/or control unit thereof, may accordingly generate, based on the rotation of the rotary axis 150 and the gear wheels 171, 172, an electronic or electric signal indicative of the direction and degree of turning of the steering wheel 200 by the driver 1 or, in other words, a steering request by the driver 1. The signal may then be used for the steer by wire application inside the vehicle 400, i.e., use the signal to steer rather than a mechanical connection between the steering wheel 200 and the steered wheels of the vehicle 400. Alternatively, a conventional mechanic connection between the steering wheel 200 and the steered wheels of the vehicle 400 may be used.

As best seen in Figs. 1, 2 and 3, the swivel system 100 in this example further comprises a mechanical locking system 190 for mechanically locking the steering wheel 200 in the stowed position SP and/or in the operational position OP. In particular, the mechanical locking system 190 (Fig. 3) may comprise one or, as shown, two mechanical locking portions 191, 192 (see Fig. 1) and a mechanical locking element 193 (see Figs. 1, 3), which may be configured correspondingly to one another or, in other words, to interlock with one another.

As seen in Fig. 1, the mechanical locking portions 191, 192 may be provided on the first hinge 130, in particular at an outer and/or radial portion thereof, and at a distance to one another, in particular corresponding to a rotational distance between the stowed position SP and the operational position OP such that either one of the mechanical locking portions 191, 192 may be brought into a predetermined position. At this predetermined position, the mechanical locking element 193 may be located for interlocking with either one of the two mechanical locking portions 191, 192. In this example, the mechanical locking portions 191, 192 are configured exemplary as recesses, in particular configured, e.g., sized, to interlock with the mechanical locking element 193. For example, as shown herein, the mechanical locking element 193 may be configured as a pin or similar, in particular configured, e.g., sized to interlock with the mechanical locking portions 191, 192.

As shown herein, the mechanical locking element 193 may be provided as part of the attachment portion 110 or at least attached thereto, in particular such that it may be positionally fixed with respect to the instrument panel 310. Hence, when the first hinge 130 is being swiveled, in particular around its first swivel axis 131, moving the steering wheel 200 between the two positions, one of the two mechanical locking portions 191, 192 is always brought into interlocking with the same mechanical locking element 193.

Exemplary, the mechanical locking system 190 is shown to be loaded with a spring 194, in particular by providing a spring-loaded mechanical locking portion 193 in form of a pin for interlocking with either of the mechanical locking portions 191, 192. By comprising the spring 194 loading the mechanical locking element 193, in particular by means of a pretensioning of the spring 194, in particular when the mechanical locking element 193 is attached to the attachment portion 110 or positionally fixed relative thereto and/or the attachment portion 110, a compact arrangement can be provided, in which the spring 194, based on its spring characteristics, dictates or at least influences the force required to swivel the steering wheel 200 between the positions.

Alternatively, the spring 194 or an additional spring may be provided elsewhere to set the force required to swivel the steering wheel 200. Also, by choosing the spring 194 with appropriate spring characteristics, e.g., by choosing the material, dimensions and type of the spring 194, the force required to swivel the steering wheel 200 may be adjusted.

As further may be seen from Figs. 2 and 3, the steering wheel arrangement 300 exemplary has an electronic safety device 180 for disabling the steering wheel 200 from being swiveled from the operational position OP into the stowed position SP. The electronic safety device 180 may be configured to receive an electronic signal for enabling the steering wheel 200 to be swiveled from the operational position OP into the stowed position SP and otherwise, in particular electronically, hold it in its position, in particular in the operational position OP. This prevents an accidental swiveling of the steering wheel 200 towards the stowed position SP during operation of the steering wheel 200 when it is in the operational position OP.

For example, the driver 1 or passenger may be required to generate the electronic signal based on input indicative of his intention to stow the steering wheel 200. The input may be provided, for example, on any vehicle input means such as but not limited to a touch display, mechanical control unit, etc. Alternatively, or additionally, the steering wheel 200, in particular its connection portion 210, may be provided with one, two or more physical or touch buttons 181 as shown in Fig. 2, which may need to be pressed and/or touched, either separately or simultaneously or together, for providing the electronic signal or, in other words, the electronic signal being received by the electronic safety device 180. Further, the electronic safety device 180 may be configured such that the swiveling from the stowed position SP into the operational position OP is always enabled.

In this example, the electronic safety device 180 exemplary comprises an electromagnetic actuator switchable based on the electronic signal. The switching may relate to either enabling or disabling the swiveling or supplying the electromagnetic actuator with electrical energy or not. For example, the electromagnetic actuator may be a solenoid. The electromagnetic actuator may be switchable based on the electronic signal in that it is either supplied with electrical energy or not, for example. Here, the electromagnetic actuator is coupled at least with one of the hinges 130, 140, for example the first hinge 130. Based thereon, it may convert the electrical energy into mechanical energy for locking the first hinge 130 in place or not locking them or in other words releasing them, when receiving the electronic signal.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 1: driver
- 100: swivel system
- 110: attachment portion
- 111-113: attachment sections
- 120: linking portion
- 130: first hinge
- 131: first swivel axis
- 132: second swivel axis
- 140: second hinge
- 141: first swivel axis
- 142: second swivel axis
- 150: rotary axis
- 160: steer by wire motor
- 170: first gear
- 171, 172: gear wheels
- 180: electronic safety device
- 181: button
- 190: mechanical locking system
- 191, 192: mechanical locking portions
- 193: mechanical locking element
- 194: spring
- 200: steering wheel
- 210: connection portion
- 220: wheel portion
- 300: steering wheel arrangement
- 400: vehicle
- OP: operational position
- SP: stowed position

## Claims

1. A swivel system (100) for a steering wheel (200) of a vehicle (400), the swivel system (100) comprising an attachment portion (110) for attaching the swivel system (100) underneath an instrument panel (310) of the vehicle (400), and the swivel system (100) comprising a linking portion (120) for linking the steering wheel (200) to the attachment portion (110), the linking portion (120) being configured such that the steering wheel (200) can be moved between a stowed position (SP), in which the steering wheel (200) is stowed at least partly underneath the instrument panel (310), and an operational position (OP).

2. The swivel system (100) of claim 1, the linking portion (120) comprising two hinges (130, 140) for linking the attachment portion (110) to the steering wheel (200).

3. The swivel system (100) of claim 2, each of the two hinges (130, 140) comprising a first swivel axis (131, 141) arranged at or proximate the attachment portion (110) and a second swivel axis (132, 142) for connection to the steering wheel (200).

4. The swivel system (100) of claim 2 or 3, the two hinges (130, 140) comprising different lengths.

5. The swivel system (100) of any one of claims 2 to 4, a first hinge (130) of the two hinges (130, 140) being configured to swivel the steering wheel (200) from the operational position (OP) into the stowed position (SP) in a first arc-shaped movement, and a second hinge (140) of the two hinges (130, 140) being configured to swivel the steering wheel (200) from the operational position (OP) into the stowed position (SP) in a second arc-shaped movement during the first arc-shaped movement of the first hinge (130), the second arc-shaped movement comprising a smaller arc radius than the first arc-shaped movement.

6. The swivel system (100) of any one of claims 2 to 5, one of the two hinges (130, 140) being at least partially configured as a housing for a gear (170) for coupling a rotary axis (150) to a steer by wire motor (160).

7. The swivel system (100) of any one of the previous claims, the swivel system (100) comprising a mechanical locking system (190) for mechanically locking the steering wheel (200) in the stowed position (SP) and/or in the operational position (OP).

8. The swivel system (100) of claim 7, the mechanical locking system (190) comprising a spring-loaded mechanical locking element (193) for interlocking with a mechanical locking portion (191, 192).

9. A steering wheel arrangement (300) for a vehicle (400), the steering wheel arrangement (300) comprising the swivel system (100) of any one of the previous claims and a steering wheel (200), the linking portion (120) linking the steering wheel (200) to the attachment portion (110).

10. The steering wheel arrangement (300) of claim 9, the steering wheel arrangement (300) further comprising a rotary axis (150) coupled to the steering wheel (200) for receiving a steering input based on a turning of the steering wheel (200), and the steering wheel arrangement (300) further comprising a gear (170) and a steer by wire motor (160), the rotary axis (150) being coupled to the steer by wire motor (160) via the gear (170).

11. The steering wheel arrangement (300) of claim 9 or 10, the steering wheel arrangement (300) further comprising a second gear (175), the rotary axis (150) being coupled to the steering wheel (200) via the second gear (175), the second gear (175) comprising a housing, to which the linking portion (120) is attached.

12. The steering wheel arrangement (300) of any one of claims 9 to 11, the steering wheel arrangement (300) comprising an electronic safety device (180) for disabling the steering wheel (200) from being swiveled from the operational position (OP) into the stowed position (SP), the electronic safety device (180) being configured to receive an electronic signal for enabling the steering wheel (200) to be swiveled from the operational position (OP) into the stowed position (SP).

13. The steering wheel arrangement (300) of claim 12, the electronic safety device (180) comprising an electromagnetic actuator (180) being switchable based on the electronic signal.

14. The steering wheel arrangement (300) of any one of claims 9 to 13, the steering wheel arrangement (300) further comprising an instrument panel (310), the attachment portion (110) attaching the swivel system (100) underneath the instrument panel (310).

15. A vehicle (400) comprising the steering wheel arrangement (300) of any one of claims 9 to 14.
